# EUROPEAN PATENT APPLICATION

(11) **EP 2 965 840 A1**
(43) Date of publication of application: **13.01.2016**
(21) Application number: 14175989.4
(22) Date of filing: 07.07.2014
(51) Int. Cl.: B22F 3/105, B29C 67/00

(54) **A laser sintering device and a method for manufacturing an object**

(71) Applicant: Siemens Aktiengesellschaft, 80333 München (DE)
(72) Inventor: Eriksson, Jonas, 61294 Finspong (SE); Simmons, Ulf, SE60370 Norrkoping (SE)

(57) **Abstract**

The present invention and the embodiments thereof relate to a laser sintering device (1) for manufacturing an object (8), and a method for manufacturing the object (8). A base plate (5) and a platform (6) are comprised in the laser sintering device (1). The object (8) is supported on the platform (6). In the present invention, the base plate (5) and the platform (6) are removably connected to each other.

## Description

The present invention relates to the field of laser sintering, and particularly to a laser sintering device for manufacturing an object, and also to a method for manufacturing the object using the laser sintering device.

Laser sintering is a popular additive manufacturing process that is used to manufacture 3-D objects in a layered manner from powdered material. The objects can be either metallic or nonmetallic. Three-dimensional (3D) objects having extremely complicated profiles and contours, such as turbomachine components, aircraft components, et cetera, are capable of being manufactured using laser sintering techniques in a controlled and a precise manner.

During the process of laser sintering, the powdered material of the desired 3-D object is fed layer after layer (layer of a certain thickness, for example, 20µm) from a feeder unit to a base plate of a laser sintering device. Based on a 3D profile of the object being manufactured, especially the profile that corresponds to that particular layer of the object, the corresponding particles of the powdered material which constitute that particular layer are selectively heated using a high power laser, until the these particles are molten. The molten particles adhere to each other, and thereby a certain layer of the object is manufactured. Thereafter, the base plate is lowered by a height, wherein the height usually corresponds to a chosen layer thickness of the powdered material (for example, 20µm), and the aforementioned laser sintering process steps are repeated for manufacturing a next layer of the object, which corresponds to an immediate upper layer of the object. The aforementioned process steps are repeated for manufacturing subsequent top layers of the object, thereby resulting in the manufacture of the object.

After the object is manufactured, i.e. after the topmost layer of the object is laser sintered, the object is removed from the base plate for the purpose of subsequent machining of the different surfaces of the object (topmost surface, bottommost surface, one or more side surfaces, et cetera). The different machining techniques can include turning, grinding, polishing, drilling, and the like. Firstly, the object is required to be removed from the base plate by cutting the object at its base, which can usually involve machine sawing, a wire electric discharge machining, et cetera. Thereafter, during the machining of the object, the object is secured tightly, for example, by tightly holding the aforementioned base of the object, which is usually performed by a holding arm of the machining tool. However, in certain cases, the base of the object is also required to undergo machining. In such cases, the machining of the base is an extremely challenging task and may pose complicated problems, because the base of the object plays a role in securing the object.

In the present laser sintering techniques, which require subsequent machining of the objects, an extension to the base of the object is also manufactured during the laser sintering of the object. The dimensions of the extension depends on the size of the base, overall size of the object, the complexity of post machining of the object, et cetera. Once the post machining is performed, the remaining portion of the extension is removed by cutting and separating the same from the object. However, laser sintering is an extremely complex, expensive, and an elaborate process. Therefore, using laser sintering techniques for manufacturing the aforementioned extension to the base of the object - that is both subsequently separated and rendered ineffective - amount to the following disadvantages: higher manufacturing costs (power and resources consumed), higher consumption of powdered raw materials, higher manufacturing time, et cetera.

It is an objective of the present invention to overcome the aforementioned problems by proposing a simple and a cost effective design of a laser sintering device for manufacturing an object.

The aforementioned objective is achieved by a laser sintering device according to claim 1, and method for manufacturing an object according to claim 9.

The underlying objective of the present invention is to propose a simple and a cost effective design of a laser sintering device for manufacturing an object, whereby the object is separable from a base plate of the laser sintering device after the laser sintering process using a simple and a cost-effective technique for further machining of the object. A laser sintering device is proposed herein, and the laser sintering device comprises a base plate and a platform. The platform assists in securing the object during the laser sintering process, wherein the object is manufactured in a layered manner. The base plate and the platform are removably connected to each other, which simplifies the process of separating the object from the base plate after the object is manufactured. Furthermore, the laser sintering device comprising such a removable connection between the base plate and the platform is useful in obviating the requirement of expensive cutting tools that are typically used for separating the object from the base plate.

According to an embodiment of the present invention, an attaching means is comprised in the laser sintering device. The attaching device is configured for connecting the platform to the base plate. Different types of attaching means can be used for the purpose of connecting the base plate to the platform, viz. mechanical attaching means, chemical attaching means, magnetic attaching means, et cetera. The connection between the platform and the base plate as provided by the attaching means is beneficial for securing the platform to the base plate, which is advantageous in reducing the relative movements between the platform and the base plate during the laser sintering process.

According to another embodiment of the present invention, the attaching means comprises a fastener, a first hole in the platform, and a second hole in the platform. The fastener is insertable through the first hole and into the second hole, and subsequently fastenable in order to achieve a tight fit. Mechanical attaching means such as the aforementioned fastener is simple and a cost-effective means for attaching the platform to the base plate. Furthermore, it is easier to fasten a mechanical fastener, such as a screw, rivet, tie bolt, in order to achieve a tight fit between the platform and the base plate, whereby the platform is more securable to the base plate. A tight fit between the platform and the base plate is beneficial in obviating vibrations and relative movements there between, which are usually experienced during the laser sintering process.

According to yet another embodiment of the present invention, the base plate and the platform are made of the same material. Since laser sintering process involves very high temperatures, i.e. temperatures approximately equal to the melting point of the powdered material (for example, laser sintering of iron powder can involve temperatures around 1500°C), the platform is therein exposed to very high temperatures. The exposure of the platform to high temperatures can lead faster degradation of the platform. By making the platform and the base plate of the same material, it is easier to transfer the heat from the platform to the base layer, because of the identical heat profiles. Furthermore, a surface area of the base plate is higher than a surface area of the platform. Therefore, more heat can be transferred from the platform to the base plate by means of convection. This is beneficial for effecting a cooling of the platform, which enables the platform to withstand extended durations of laser sintering.

According to yet another embodiment of the present invention, the platform is cylindrical. A cylindrical profile of the platform is advantageous during the machining of the object. The machining of the object is typically performed by a machining tool such as a lathe, a milling machine, a grinding machine, et cetera, which is normally provided with a cylindrical holding arm for securing the object to be machined. Since the cylindrical profile of platform acts as a base of the object, the object can be secured tightly during its machining by the holding arm of the aforementioned machining tool.

According to yet another embodiment of the present invention, the base plate of the laser sintering device comprises a recess. The platform is arrangeable inside the recess. Since the platform is arranged inside the recess, more surface contact between inner surfaces of the recess and outer surfaces of the platform can be established, whereby frictional forces between the platform and the base plate are increasable, which results in better secureness of the platform, and also results in reducing a dislodgement of the platform from the base plate during an operation of the laser sintering device.

According to yet another embodiment of the present invention, a depth 'd' of the recess is equal to a height 'h' of the platform. By making the depth 'd' of the recess equal to the height 'h' of the platform, a flat and a uniform profile of the base plate is obtained, which is a preferred profile of the base plate in typical laser sintering devices.
According to yet another embodiment of the present invention, the recess is also cylindrical. Additionally, a diameter 'D₁' of the recess is greater than a diameter 'D₂' of the platform. Therewith, the arrangement of the platform inside the recess is further simplified. Furthermore, if D₂ is chosen to be around 0.99 times of D₁, then outer surfaces of the platform almost contact and brush the inner surfaces of the recess. Therewith, by minor tightening of the fastener results in a tighter fit between the platform and the base plate, therewith reducing the mechanical efforts required to obtain a tighter fit between the platform and the base plate.

According to a method for manufacturing an object, firstly the object is laser sintered on a removably connected platform of a laser sintering device. The platform is removably connected to a base plate of the laser sintering device. Subsequently, the platform is removed from the base plate. Finally, the platform is separated from the object. Therewith, it is possible to secure the object to a holding arm of a machining tool for the purpose of machining the object, wherein the object is securable by holding the platform. Herein, the machining of the object can be performed in a facile manner, especially a base of the object, because the object is secured to the machining tool by means of the platform, instead of the object itself. Furthermore, it is easier to separate the platform from the object after machining, because simpler cutting tools can be used for performing the same.

The aforementioned and other embodiments of the present invention related to a laser sintering device and a method for manufacturing an object will now be addressed with reference to the accompanying drawings of the present invention. The illustrated embodiments are intended to illustrate, but not to limit the invention. The accompanying drawings herewith contain the following FIGs, in which like numbers refer to like parts, throughout the description and drawings.

The FIGs illustrate in a schematic manner further examples of the embodiments of the invention, in which:
- FIG 1: depicts an exemplary laser sintering device for manufacturing an object according to one or more embodiments of the present invention,
- FIG 2: depicts an exploded perspective view of the platform comprising the object and the base plate comprised in the laser sintering device referred to in FIG 1, and
- FIG 3: depicts a flowchart of a method for manufacturing the object referred to in FIG 1.

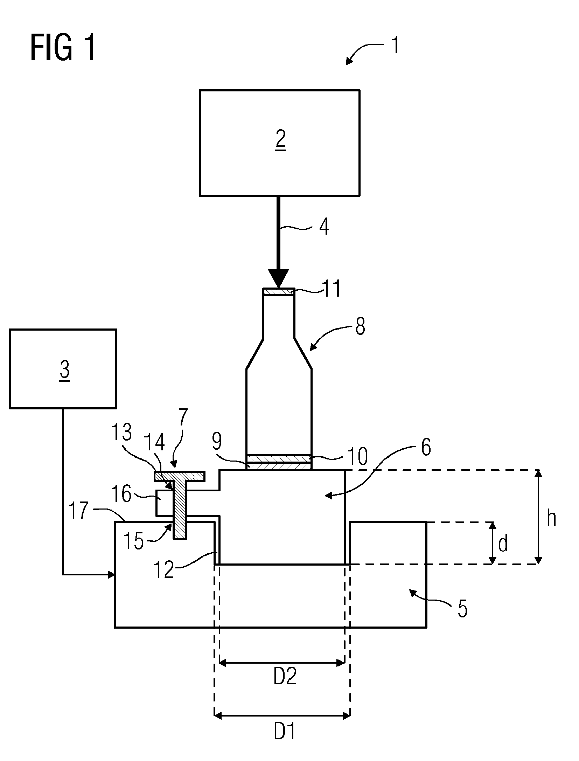

An exemplary laser sintering device 1 for manufacturing an object 8 according to one or more embodiments of the present invention is depicted in FIG 1.

The laser sintering device 1 of FIG 1 essentially comprises a laser unit 2 for generating a laser beam 4, a base plate 5 whereon the object 8 is manufactured by laser sintering, and a powder feeder unit 3 for feeding powdered material (not depicted) to the base plate 5. The powder feeder unit 3 is configured to provide the powdered material to the base plate 5 in a layered manner. The laser unit 2 is configured to generate the laser beam 4, direct the laser beam 4 towards the particular layer of the powdered material lying on the base plate 5, and also to sinter the layer of the powdered material, wherewith a first sintered layer 9 of the object 8 is obtained. Thereafter, the base plate 5 is lowered by a magnitude that is typically equal to a thickness of the layer (for example, 20µm) of the powdered material, a next layer of the powdered material (not depicted) is disposed on the first sintered layer 9, the laser beam 4 is again generated by the laser unit 2, the laser beam 5 is directed towards the next layer of the powdered material disposed on the first sintered layer 9, and the next layer of the powdered material is sintered, wherewith a second sintered layer 10 of the object 8 is obtained. The second sintered layer 10 of the object 8 is located on top of the first sintered layer 9 as viewed in a direction along the laser beam 4. Herein, the first sintered layer 9 and the second sintered layer 10 can also be construed to form the base layers of the object 8. The aforementioned steps related to laser sintering are thereafter repeated for obtaining subsequent upper layers of the object 8, and the laser sintering process is stopped after the obtainment of a topmost sintered layer 11 of the object 8.

Herein, the thickness of the layer of the powdered material provided to the base plate 5 during the laser sintering process is a user defined parameter, and the thickness of the layer of the powdered material is configurable accordingly. Furthermore, one or more parameters of the laser beam 4 generated by the laser unit 2 - such as a power of the laser beam 4, a pulse duration of the laser beam 4, et cetera - are also other user defined parameters, and the same are again configurable. The thickness of the layer of the powdered material and the parameters of the laser beam 4 are exemplarily chosen and the laser sintering device 1 is accordingly configured based on desired properties of the object, technical specifications and technical constraints of the laser sintering device 1, desired thickness of the sintered layers 9-11 of the object 8, et cetera.

Herein, the aforementioned components (the laser unit 2, the powder feeder unit 3, and the base plate 5) of the laser sintering device 1, and the functioning of the laser sintering device 1, are well-known in the art and are not elucidated herein for the purpose of brevity.

According to embodiments of the present invention, a platform 6 is comprised in the laser sintering device 1. Herein, the platform 6 can also be construed as a portion that is both attachable to the base plate 5 and also removable from the base plate 5. The platform 6 is removable from the base plate 5 by means of detaching the platform 6 from the base plate 5. The power feeder unit 3 is configured to dispose the aforementioned layers of the powdered material for the object 8 sintered on the platform 6. The laser unit 2 is configured to direct the laser beam 4 in a direction towards the platform 6 for sintering the layers of the powdered material disposed on the platform 6. The object 8 is then manufactured on the platform 6 by laser sintering, i.e. the first sintered layer 9, the second sintered layer 10, the topmost sintered layer 11 of the object 8, et cetera, are manufactured on the platform 6. Herein, the platform 6 supports the object 8 and also secures the object 8 during the laser sintering of the object 8.

In the embodiment depicted in FIG 1, a recess 12 is provided in the base plate 5, and the platform 6 is arranged in the recess 12. The recess 12 can be provided by casting the base plate 5, forging the base plate 5, or by removing a certain portion of the base plate 5 at a desired location by machining the base plate 5, et cetera. The recess 12 in the base plate 5 facilitates an arrangement of the platform 6 inside the recess 12. Furthermore, the recess 12 and the platform 6 are profiled such that the arrangement of the platform 6 inside the recess 12 reduces relative movements of the platform 6 and the base plate 5 especially during the manufacturing of the object 8 by laser sintering.

Herein, a profile of the recess 12 can be cylindrical, elliptic cylindrical, prismatic, polyhedral, et cetera. Furthermore, based on the profile of the recess 12, one or more dimensions of the recess 12 can be defined as a diameter of the recess 12, magnitudes of sides of the recess 12, magnitudes of major and minor axes of the recess 12, et cetera. In the embodiment depicted in FIG 1, the recess 12 is profiled to be cylindrical, and the dimensions of the recess 12 are defined by a diameter 'D₁' of the recess 12, and by a depth 'd' of the recess 12.

Similarly, a profile of the platform 6 herein can also be cylindrical, elliptic cylindrical, prismatic, polyhedral, et cetera. Furthermore, based on the profile of the platform 6, one or more dimensions of the platform 6 can also be defined as a diameter of the platform 6, magnitudes of sides of the platform 6, magnitudes of major and minor axes of the platform 6, et cetera. In the embodiment depicted in FIG 1, the platform 6 is profiled to be cylindrical, and the dimensions of the platform 6 are defined by a diameter 'D₂' of the platform 6, and by a height 'h' of the platform 6.

It may be noted herein that for the purpose of arrangement of the platform 6 inside the recess 12, and also for reducing the relative movements of the platform 6 and the base plate 5 during the manufacturing of the object 8, the diameter 'D₁' of the recess 12 is preferably greater than the diameter 'D₂' of the platform 6. Furthermore, the height 'h' of the platform 6 is preferably greater than the depth 'd' of the recess 12. Therewith, the platform 6 is arranged inside the recess 12, and the platform 6 is also configured to support the object 8 during the laser sintering process.

Herein, the base plate 5 and the platform 6 are also removably connected to each other, thereby enabling the separation of the platform 6 from the base plate 5, especially after the object 8 is manufactured. An attaching means 7 is provided for the purpose of connecting the platform 6 to the base plate 5, wherewith the platform 6 is attachable to the recess 12 in the base plate 5 for the purpose of connecting and securing the platform 6 to the base plate 5, and also for the purpose of further reduction of the relative movements of the platform 6 and the base plate 5 during the manufacturing of the object 8. Thus, the platform 6 is not only connected to the base plate 5, but also configurable to secure the object 8 during the laser sintering process.

In FIG 1, the platform 6 is provided with an elongated member 16. The elongated member 16 extends laterally from the platform 6, and the elongated member 16 is also essentially arranged parallel to a top surface 17 of the base plate 5. The elongated member 16 is provided with a first hole 14, which is a through hole. Furthermore, a corresponding second hole 15 is provided in the base plate 5. A fastener 13, such as a rivet, is inserted through the first hole 14, and also inserted into the second hole 15, and the fastener 13 is thereafter tightened for both connecting and securing the platform 6 to the base plate 5. Herein, the attaching means 7 comprises the fastener 13, the first hole 14, and the second hole 15.

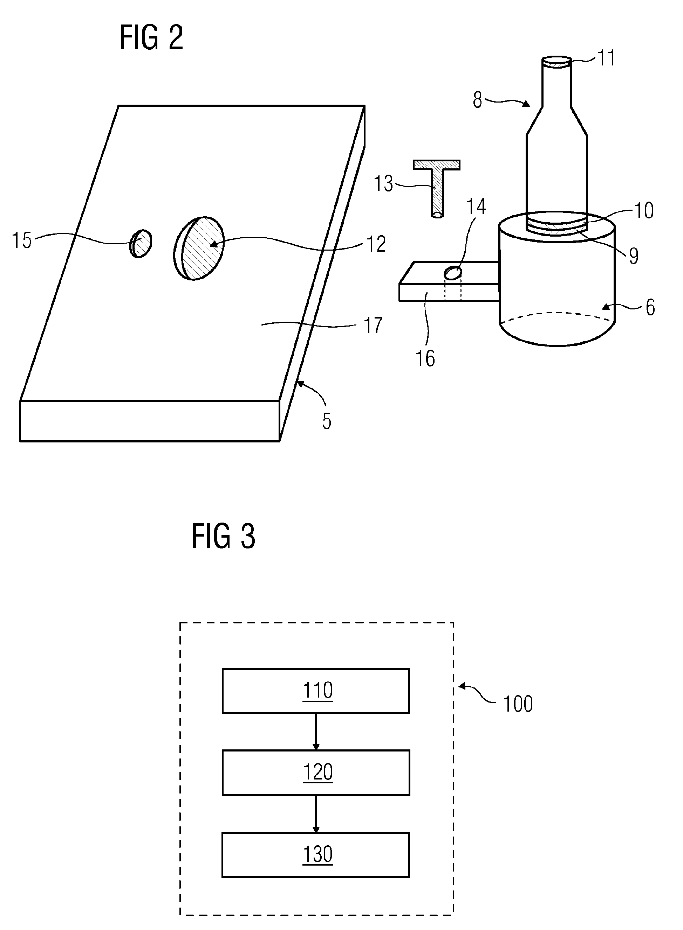

Reference is also made herein to FIG 2 along with FIG 1. FIG 2 depicts an exploded perspective view of the platform 6 comprising the object 8 and the base plate 5 of the laser sintering device 1.

Herein, the dimensions of the fastener 13, the first hole 14, and the second hole 15 can be chosen such that a tight fit is obtained between the platform 6 and the base plate 5. After the object 8 is manufactured, the fastener 13 can be unfastened and removed from the second hole 15 of the base plate 5, and also from the first hole 14 of the platform 6, wherewith the platform 6 comprising the object 8 is thereafter jointly separable from the base plate 5.

According to one example of the attaching means 7, the first and the second holes 14,15 can also be provided with corresponding threads, for example female threads. The fastener 13, such as a screw or a tie bolt comprising a male thread, can then be inserted through the first hole 14 and into the second hole 15, and the fastener 13 can be tightened thereafter for obtaining a tight fit between the platform 6 and the base plate 5. The fastener 13 can be unfastened and removed for the purpose of separating the platform 6 from the base plate 5.

According to another example of the attaching means 7, the platform 6 and the base plate 5 can be clamp fitted for connecting the base plate 5 to the platform 6. For example, the elongated member 16 can be clamped to the top surface 17 of the base plate 5 by means of a clamp and a screw. The clamp can be unfastened for the purpose of separating the platform 6 from the base plate 5.

Referring back to FIG 1, the attaching means 7 can also be replaced alternatively with chemical means for attaching or magnetic means for attaching the platform 6 to the base plate 5. Such kind of attaching means obviate a requirement of the fastener 13, the first hole 14 in the platform 6, and the second hole 15 in the base plate 5, et cetera. Such alternate means for attaching are also elucidated below as additional examples.

According to one example of an alternate attaching means, the platform 6 can be attached to base plate 5 via the recess 12 using epoxy glue, and the epoxy glue is construable as the aforementioned chemical means for attaching. After the object 8 is manufactured, the object 8 along with the platform 6 can be then removed by cutting away the platform 6 from the base plate 5 by means of an electrical saw, an electrical machining tool, et cetera.

According to another example of an alternate attaching means, the platform 6 can also be attached to base plate 5 via the recess 12 using respective magnets provided in the platform 6 and the base plate 5. The magnetic force between the platform 6 and the base plate 5 secures the platform 6 to the base plate 5 during the laser sintering process. The aforementioned magnets can be either permanent magnets or electromagnets. After the object 8 is manufactured, the object 8 along with the platform 6 can be then removed by exerting an opposing force that greater than the magnetic force that holds the platform 6 and the base plate 5 together.

It may be noted herein that laser sintering process involves very high temperatures, i.e. temperatures approximately equal to the melting point of the powdered material (for example, laser sintering of iron powder can involve temperatures around 1500°C). The platform 6 is therein exposed to such high temperatures, because the layer of the powdered material is sintered on the platform 6. Therefore, for the proper transfer of heat from the platform 6 to the base plate 5, and also for the purpose of protection of the platform 6 during the laser sintering process, it is preferred that the base plate 5 and the platform 6 are made of the same material.

Furthermore, it may be noted herein from FIG 1 that the base plate 5 of the laser sintering device 1 comprises only one recess 12 and one platform 6 arranged in the recess 12. However, it may be understood herein that a plurality of such recesses can be realised in the base plate, and a plurality of corresponding platforms can be arranged in the corresponding plurality of recesses for the purpose of simultaneous manufacturing of a plurality of objects.

A flowchart of a method 100 for manufacturing the object 8 using the laser sintering device 1 according to one or more embodiments of the present invention is depicted in FIG 3. Reference is herein made to FIG 1 also for the purpose of elucidation of FIG 3.

In step 110 of the method 100, the object 8 is laser sintered on the removably connected platform 6 of the laser sintering device 1. The removable connection between the platform 6 and the base plate 5 is achieved by means of the aforementioned attaching means 7. Herein, the aforementioned first sintered layer 9 is manufactured, followed by the aforementioned second sintered layer 10 on top of the first sintered layer 9, and so forth. The laser sintering process is stopped after the obtainment of the topmost sintered layer 11, wherewith the object 8 is manufactured.

In a subsequent step 120 of the method 100, the platform 6 is removed from the base plate 5. Herein, the attaching means 7 is deactivated, i.e. the fastener 13 is unfastened and removed from the second hole 15 and the first hole 14, wherewith the platform 6 comprising the object 8 is rendered removable from the base plate 5. Thereafter, the platform 6 is removed from the recess 12 of the base plate 5, whereby the platform 6 comprising the object 8 is now capable of being machined. The platform 6 attached to the object 8 is advantageous for the purpose of holding the object 8 during the machining of the object 8.

In a concluding step 130 of the method 100, the platform 6 is separated from the object 8. Step 130 is typically performed after the object 8 is machined using a machining tool, for example a lathe, a milling machine, a grinding machine, et cetera. During the machining of the object 8, the object is secured at its base, i.e. by securing the platform 6 using a holding arm of a machining tool, and one or more surfaces of the object 8 are ground and smoothened for obtaining a smooth profile for the object 8. Thereafter, the machined object 8 is separated from the platform 6 using a cutting tool such as an electric saw.

Though the invention has been described with reference to specific embodiments, this description is not meant to be construed in a limiting sense. Various examples of the disclosed embodiments, as well as alternate embodiments of the invention, will become apparent to persons skilled in the art upon reference to the description of the invention. It is therefore contemplated that such modifications can be made without departing from the embodiments of the present invention as defined.

## Claims

1. A laser sintering device (1) for manufacturing an object (8), the laser sintering device (1) having:
- a base plate (5), and
- a platform (6) for securing the object (8), **characterized in that** the platform (6) is removably connected to the base plate (5).

2. The laser sintering device (1) according to claim 1, further comprising:
- an attaching means (7) for connecting the platform (6) to the base plate (5).

3. The laser sintering device (1) according to claim 2,
wherein the attaching means (7) comprises:
- a fastener (13),
- a first hole (14) in the platform (6), and
- a second hole (15) in the base plate (5),
wherein the fastener (13) is insertable into the first hole (14) and the second hole (15).

4. The laser sintering device (1) according to any of the claims 1 to 3,
wherein the base plate (5) and the platform (6) are made of the same material.

5. The laser sintering device (1) according to any of the claims 1 to 4,
wherein the platform (5) is cylindrical.

6. The laser sintering device (1) according to any of the claims 1 to 5,
wherein the base plate (5) further comprises:
- a recess (12), wherein the platform (6) is arrangeable inside the recess (12).

7. The laser sintering device (1) according to claim 6,
wherein a depth (d) of the recess (12) is equal to a height (h) of the platform (6).

8. The laser sintering device (1) according to claim 6 or 7,
wherein the recess (12) is cylindrical, and wherein a diameter (D₁) of the recess (12) is greater than a diameter (D₂) of the platform (6).

9. A method (100) for manufacturing an object (8), the method (100) comprising the steps of:
- (110) laser sintering the object (8) on a removably connected platform (6) of a base plate (5),
- (120) removing the platform (6) from the base plate (5), and
- (130) separating the object (8) from the platform (6).
